# EUROPÄISCHE PATENTSCHRIFT

(11) **EP 3 749 876 B1**
(45) Veröffentlichungstag und Bekanntmachung des Hinweises auf die Patenterteilung: **06.04.2022**
(21) Anmeldenummer: 19705914.0
(22) Anmeldetag: 08.01.2019
(51) Int. Cl.: F16D 25/08

(54) **NEHMERZYLINDER MIT KOLBEN AUSGEBILDET ZUR VERSCHLEISSREDUZIERUNG; BETÄTIGUNGSEINRICHTUNG; SOWIE KUPPLUNGSSYSTEM**
SLAVE CYLINDER WITH PISTON, DESIGNED FOR WEAR REDUCTION; ACTUATION DEVICE; AND COUPLING SYSTEM
CYLINDRE RÉCEPTEUR MUNI D'UN PISTON CONÇU POUR RÉDUIRE L'USURE, DISPOSITIF D'ACTIONNEMENT ET SYSTÈME D'EMBRAYAGE

(30) Priorität: 05.02.2018 DE 102018102449
(43) Veröffentlichungstag der Anmeldung: 16.12.2020
(73) Patentinhaber: Schaeffler Technologies AG & Co. KG, 91074 Herzogenaurach (DE)
(72) Erfinder: PROKHOROV, Kirill, 77855 Achern (DE); KIESNER, Viktor, 77955 Ettenheim (DE)
(86) Internationale Anmeldenummer: PCT/DE2019/100011
(87) Internationale Veröffentlichungsnummer: WO 2019/149307

(56) Entgegenhaltungen:
- DE-A1- 19 646 852
- DE-A1-102012 221 171
- DE-A1-102013 219 842
- DE-A1-102015 224 516

## Beschreibung

Die Erfindung betrifft einen Nehmerzylinder für eine Kupplungsbetätigungseinrichtung eines Kraftfahrzeuges, wie eines Pkws, Lkws, Busses oder sonstigen Nutzfahrzeuges, mit einem Gehäuse und einem in dem Gehäuse verschiebbar aufgenommenen sowie mit dem Gehäuse einen fluidischen Druckraum begrenzenden / einschließenden Kolben, wobei der Kolben einen entlang eines Hülsenbereichs des Gehäuses gleitend geführten Grundkörper und eine an den Grundkörper angebrachte, den Druckraum zu einer Umgebung hin abdichtende Dichtung aufweist. Zudem betrifft die Erfindung eine Betätigungseinrichtung für eine Kupplung eines Kraftfahrzeuges, mit diesem Nehmerzylinder. Auch betrifft die Erfindung ein Kupplungssystem mit dieser Betätigungseinrichtung sowie einer Kupplung.

Gattungsgemäße Nehmerzylinder sind bspw. aus der DE 10 2016 219 592 A1, DE 196 46 852 A1, DE 10 2013 219842 A1 und DE10 2015 224516 A1 bekannt. Hierin ist ein Nehmerzylinder für ein hydraulisches Ausrücksystem zur Betätigung einer Reibungskupplung mit entsprechendem Kolben offenbart.

Als Nachteil dieser aus dem Stand der Technik bekannten Ausführungen hat es sich jedoch herausgestellt, dass es über den Einsatz des Nehmerzylinders hinweg zwischen dem Gehäuse und dem Kolben zu einem Verändern der Oberflächenbeschaffenheit des Hülsenbereiches kommt. Dies liegt insbesondere daran, dass durch die im Betrieb rotierende Kupplung Vibrationen an die Einzelteile des Nehmerzylinders, bspw. den Kolben und die Dichtung übertragen werden. Diese Vibrationen führen oft dazu, dass es zu einem leichten Taumeln des Kolbens, d.h. zu einem Verkippen des Kolbens gegenüber seiner Verschiebeachse / der Längsachse des Gehäuses kommt. Da sich der Kolben wiederum an Führungsbereichen des Gehäuses abstützt, kommt es daher bei einem Verschieben des Kolbens zu einem erhöhten Verschleiß und auf Dauer einem Ändern der Oberflächenbeschaffenheit. Wenn bspw. zumindest ein Bauteil (Gehäuse oder Grundkörper) aus einem faserverstärkten Material hergestellt ist, wird dieser Effekt noch verstärkt. Denn während des Verschleißes werden die entsprechenden Fasern freigelegt; über die freigelegten Fasern gleitet anschließend die Dichtung des Kolbens hinweg. Dadurch kann die Dichtung beschädigt werden und schließlich ausfallen. Dies kann letztendlich gar dazu führen, dass der Nehmerzylinder vollständig ausfällt.

Es ist daher die Aufgabe der vorliegenden Erfindung, die aus dem Stand der Technik bekannten Nachteile zu beheben und insbesondere einen Nehmerzylinder zur Verfügung zu stellen, der ein verbessertes Verschleißverhalten seiner einzelnen Komponenten aufweist, wobei gleichzeitig der Aufbau des Nehmerzylinders möglichst einfach gehalten ist.

Dies wird erfindungsgemäß dadurch gelöst, dass der Grundkörper axial zwischen einem an dem Hülsenbereich abgestützten / gleitend gelagerten Gleitbereich sowie einem die Dichtung aufnehmenden Haltebereich / Befestigungsbereich einen zu dem Hülsenbereich beabstandeten Spaltbereich aufweist.

Durch den Spaltbereich ist ein Freistich an dem Grundkörper bereitgestellt. Dadurch überdecken sich die Laufabschnitte des Grundkörpers sowie der Dichtung entlang des Hülsenbereiches im Vergleich zum Stand der Technik deutlich weniger bzw. sind gar voneinander getrennt. Dadurch läuft der Grundkörper im Betrieb in einem anderen Längsabschnitt des Hülsenbereiches als die Dichtung. Dadurch wird erreicht, dass die Dichtung ihren eigenen, von dem Grundkörper beabstandeten Laufabschnitt an dem Hülsenbereich aufweist. Dadurch wird die Wahrscheinlichkeit einer Beschädigung der Dichtung deutlich gesenkt. Die Betriebssicherheit des gesamten Nehmerzylinders wird somit deutlich verbessert.

Weitere vorteilhafte Ausführungsformen sind mit den Unteransprüchen beansprucht und nachfolgend näher erläutert.

Erfindungsgemäß schließt der Spaltbereich direkt / unmittelbar (in axialer Richtung des Kolbens) an den Haltebereich an, sodass der Grundkörper axial zwischen einer an dem Hülsenberiech anliegenden Dichtstelle der Dichtung und dem Gleitbereich durchgängig / vollständig von dem Hülsenbereich beabstandet ist.

Dadurch wird der Verschleiß des Hülsenbereichs im Laufabschnitt der Dichtung weiter herabgesenkt.

Dieser Effekt wird weiter verstärkt, wenn der Spaltbereich eine derartige Länge aufweist, dass ein erster Längsabschnitt / Laufabschnitt des Hülsenbereiches, entlang dessen die Dichtung im Betrieb hin und her verschiebbar ist, vollständig neben (/ axial versetzt) einem zweiten Längsabschnitt / Laufabschnitt des Hülsenbereiches, entlang dessen der Gleitbereich des Grundkörpers im Betrieb hin und her verschiebbar ist, angeordnet ist.

Ist der Spaltbereich durch eine in radialer Richtung eingebrachte Aussparung (im Grundkörper) ausgebildet, ist dieser besonders einfach herstellbar. Die Aussparung wird weiter bevorzugt unmittelbar bei einem Urformvorgang des Grundkörpers in dem Grundkörper ausgebildet oder nachträglich mittels eines separaten Verfahrensschrittes eingebracht.

Erfindungsgemäß beträgt die Länge des Spaltbereiches / der Aussparung maximal die Hälfte der Gesamtlänge des Grundkörpers, sodass eine stabile Führung des Kolbens im Betrieb gewährleistet ist.

Als besonders zweckmäßig hat es sich herausgestellt, wenn die Aussparung eine Tiefe (radiale Erstreckung) von bis zu 70%, bevorzugt von bis zu 50%, weiter bevorzugt von bis zu 30%, besonders bevorzugt von bis zu 20% einer Dicke (in radialer Richtung) des Grundkörpers aufweist.

Die Tiefe der Aussparung weist dabei mindestens 0,1 mm, bevorzugt zwischen 0,1 mm und 2,5 mm, weiter bevorzugt zwischen 0,4 mm und 2 mm, besonders bevorzugt zwischen 0,8 mm und 1 mm auf.

Vorteilhaft ist es zudem, wenn der Hülsenbereich und/oder der Grundkörper aus einem Kunststoffmaterial bestehen / besteht. Dadurch sind diese besonders kostengünstig herstellbar.

Um die Festigkeit weiter zu steigern ist es auch von Vorteil, wenn dieses Kunststoffmaterial (des Hülsenbereichs und/oder des Grundkörpers) ein faserverstärktes, besonders bevorzugt ein glasfaserverstärktes, Kunststoffmaterial ist.

Die Dichtung besteht zweckmäßigerweise aus einem Elastomer.

Zudem betrifft die Erfindung eine Betätigungseinrichtung für eine Kupplung eines Kraftfahrzeuges, mit dem erfindungsgemäßen Nehmerzylinder nach zumindest einer der zuvor beschriebenen Ausführungen.

Auch betrifft die Erfindung ein Kupplungssystem für einen Antriebsstrang eines Kraftfahrzeuges, mit einer Kupplung sowie dieser Betätigungseinrichtung.

In anderen Worten ausgedrückt, ist erfindungsgemäß ein Kolben mit Freistich Spaltbereich / Aussparung) zur Verschleißreduzierung beim Auftreten von Taumelbewegungen umgesetzt. Somit ist erfindungsgemäß im Kolben eines Nehmerzylinders ein Freistich vorgesehen, um den Außendurchmesser des Kolbens im Bereich der Lauffläche (Hülsenbereich / Längsabschnitte) der Richtung im Nehmerzylindergehäuse (Gehäuse) zu verringern und dadurch beim Auftreten von Taumelbewegungen den Verschleiß an Dichtung, Gehäuse, Kolben und Dichtringträger (Dichtringhalter) zu verringern.

Die Erfindung wird nun nachfolgend anhand von Figuren näher erläutert.

Es zeigen:
- Fig. 1: eine Längsschnittdarstellung eines erfindungsgemäßen Nehmerzylinders nach einem bevorzugten Ausführungsbeispiel, wobei dessen prinzipieller Aufbau gut erkennbar ist,
- Fig. 2: eine Längsschnittdarstellung eines in Fig. 1 eingesetzten Grundkörpers eines Kolbens des Nehmerzylinders, sowie
- Fig. 3: zwei Längsschnittdarstellungen des Nehmerzylinders nach Fig. 1, wobei einerseits im Vergleich zu Fig. 1 auf die Darstellung eines Betätigungslagers sowie der Anbindungsstellen des Kolbens, eines Faltenbalgs sowie einer Rückstellfeder seitens des Betätigungslager verzichtet ist, und wobei in der linken Teildarstellung der Kolben in einer eingefahrenen Stellung und in der rechten Teildarstellung in einer ausgefahrenen Stellung zu erkennen ist.

Die Figuren sind lediglich schematischer Natur und dienen ausschließlich dem Verständnis der Erfindung. Die gleichen Elemente sind mit denselben Bezugszeichen versehen.

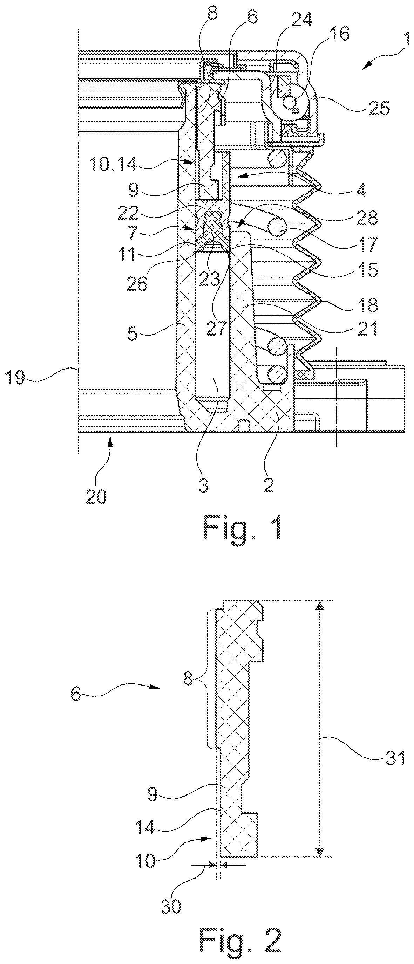

In Fig. 1 ist der erfindungsgemäße Nehmerzylinder 1 nach einem bevorzugten Ausführungsbeispiel hinsichtlich seines Aufbaus gut erkennbar. Der Nehmerzylinder 1 ist als ein fluidischer, nämlich hydraulischer Nehmerzylinder 1 umgesetzt, kann jedoch prinzipiell gemäß weiteren Ausführungen auch als pneumatischer Nehmerzylinder ausgeführt sein. Der Nehmerzylinder 1 ist Bestandteil eines Kupplungssystems, das eine Kupplung, vorzugsweise in Form einer Reibungskupplung, sowie eine Betätigungseinrichtung aufweist. Der Nehmerzylinder 1 ist Bestandteil der Betätigungseinrichtung und wirkt im Betrieb der Kupplung auf typische Weise verstellend auf diese ein. Dadurch ist die Kupplung zwischen ihrer eingerückten Stellung und ihrer ausgerückten Stellung verstellbar. Der Nehmerzylinder 1 ist auf typische Weise fluidisch mit einem Geberzylinder der Betätigungseinrichtung weiter verbunden, wobei auf dessen Darstellung der Übersichtlichkeit halber verzichtet ist.

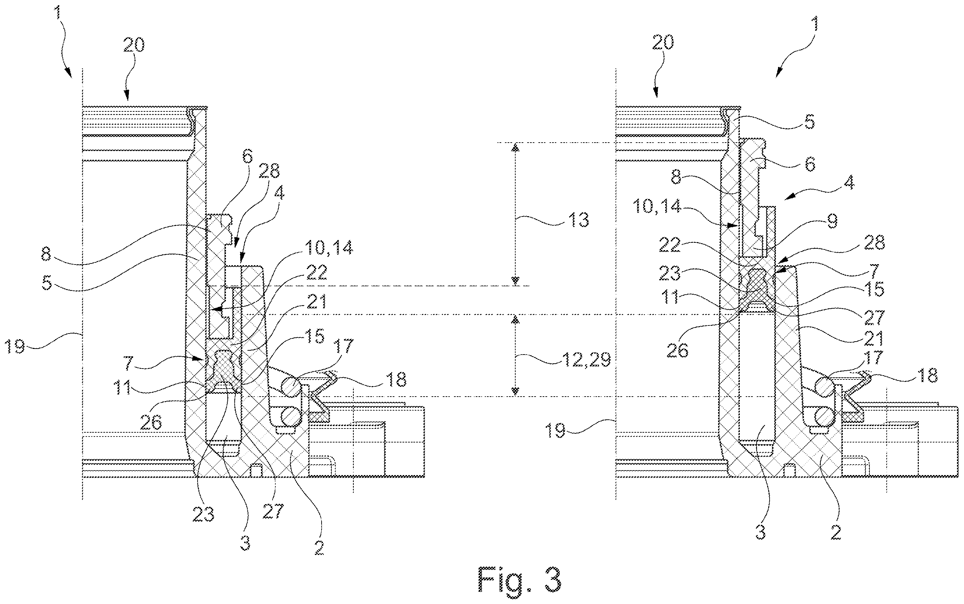

Der Nehmerzylinder 1 ist als ein konzentrischer Kupplungsnehmerzylinder (CSC / "Concentric Slave Cylinder") ausgebildet. Der Nehmerzylinder 1 ist somit gesamtheitlich im Wesentlichen ringförmig ausgebildet. Der Nehmerzylinder 1 weist ein ihn vollständig durchdringendes, zentrales, sich entlang einer Längsachse 19 erstreckendes Durchgangsloch 20 auf. Um die Längsachse 19 erstreckt sich der Nehmerzylinder 1 ringförmig. Demnach weist der Nehmerzylinder 1 ein im Wesentlichen ringförmig ausgebildetes Gehäuse 2 auf. In dem Gehäuse 2 ist ein als Ringkolben ausgeführter Kolben 4 verschiebbar gelagert. Der Kolben 4 ist zwischen einer ausgefahrenen Stellung (wie in Fig. 1 und Fig. 3, rechte Teildarstellung, zu sehen), sowie einer eingefahrenen Stellung (wie in Fig. 3, linke Teildarstellung, zu sehen) zum Erzielen der jeweiligen eingerückten oder ausgerückten Stellung der Kupplung verschiebbar.

Zurückkommend auf Fig. 1 ist ersichtlich, dass das Gehäuse 2 zusammen mit dem Kolben 4 einen ringförmigen fluidischen Druckraum 3 einschließt. Der Druckraum 3 ist mit dem Geberzylinder fluidisch weiter verbunden und entsprechend mit einem Druck zur Umsetzung der ausgefahrenen Stellung beaufschlagbar. Der Druckraum 3 ist durch einen radialen Zwischenraum zwischen einem sich axial (d.h. entlang der Längsachse 19) erstreckenden Hülsenbereich 5 sowie einem radial beabstandet zu diesem Hülsenbereich 5 angeordneten, sich ebenfalls entlang der Längsachse 19 / axial erstreckenden Außenwandbereich 21 gebildet. Der Hülsenbereich 5 erstreckt sich in axialer Richtung länger als der Außenwandbereich 21 und dient zum radialen Abstützen / zur Führung des Kolbens 4, wie nachfolgend näher beschrieben.

Der Kolben 4 an sich weist einen Grundkörper 6 sowie eine mit diesem Grundkörper 6 verbundene Dichtung 7 auf. Die Dichtung 7 ist ringförmig ausgebildet. Zur Aufnahme der Dichtung 7 seitens des Grundkörpers 6 weist der Grundkörper 6 einen Haltebereich 9 (auch als Verbindungs-, Befestigungs-, oder Aufnahmebereich bezeichnet) auf. Der Haltebereich 9 ist an einem der Dichtung 7 (axial) zugewandten Endbereich des Grundkörpers 6 ausgebildet. Die Dichtung 7 ist in dieser Ausführung mit einem Dichtringhalter 22 versehen. Der Dichtringhalter 22 ist unmittelbar an dem Haltebereich 9 befestigt. Neben dem Dichtringhalter 22 weist die Dichtung 7 einen eigentlichen Dichtbestandteil 23 (als Dichtring ausgeführt) auf, der durch den Dichtringhalter 22 in seiner Anordnung und Ausrichtung gestützt ist. Die Dichtung 7 ist so ausgebildet, dass der Druckraum 3 über den gesamten Verschiebeweg 29 des Kolbens 4 zwischen seiner eingefahrenen und ausgefahrenen Stellung hinweg im Betrieb zu einer Umgebung hin abgedichtet ist. Somit dichtet die Dichtung 7 den Druckraum 3 zu einer Öffnung 28 des Gehäuses 2, aus der der Kolben 4 sich zu dem Betätigungslager 16 hin hinauserstreckt, hin ab.

Mit seinem der Dichtung 7 (axial) abgewandten Endbereich ist der Grundkörper 6 auf typische Weise verschiebefest mit einem Betätigungslager 16, das in Form eines Wälzlagers (Kugellager) ausgebildet ist, gekoppelt. Hierbei ist der Grundkörper 6 in axialer Richtung (indirekt) an einen Lagerinnenring 24 des Betätigungslagers 16 abgestützt. Ein relativ zu dem Lagerinnenring 24 wälzgelagerter Lageraußenring 25 des Betätigungslagers 16 ist mit einem entsprechenden Betätigungselement der Kupplung, bspw. einer Tellerfeder oder einem Drucktopf, beweglich gekoppelt.

Zum Abstützen des Kolbens 4 ist axial zwischen dem Betätigungslager 16 und dem Gehäuse 2 eine Vorspannfeder 17 eingesetzt. Die Vorspannfeder 17 ist radial außerhalb des Außenwandbereiches 21 angeordnet. Die Vorspannfeder 17 ist als Schraubendruckfeder realisiert. Die Vorspannfeder 17 ist derart eingesetzt, dass sie das Betätigungslager 16 und somit auch den Kolben 4 in die ausgefahrene Stellung des Kolbens 4 hin vorspannt. Wiederum radial außerhalb der Vorspannfeder 17 ist ein Faltenbalg 18 zwischen dem Betätigungslager 16 und dem Gehäuse 2 eingesetzt, um die radial innerhalb des Faltenbalgs 18 liegenden Bestandteile, d.h. die Vorspannfeder 17 sowie den Kolben 4 vor einem erhöhten Schmutzeintrag zu schützen.

Erfindungsgemäß ist der Grundkörper 6 in axialer Richtung zwischen einem radial von außen an dem Hülsenbereich 5 gleitend abgestützten Gleitbereich 8 sowie dem die Dichtung 7 aufnehmenden Haltebereich 9 mit einem (zu dem Hülsenbereich 5 beabstandeten) Spaltbereich 10 ausgebildet. Dieser Spaltbereich 10 ist auch in Fig. 2 gut zu erkennen. Der Spaltbereich 10 ist durch eine radiale Aussparung 14 in dem Grundkörper 6 ausgebildet. Die Aussparung 14 bildet einen sich von radial innen in den Grundkörper 6 hineinerstreckenden Freistich aus. Der Spaltbereich 10 weist in axialer Richtung eine kontinuierliche / gleichbleibende Tiefe 30 (radiale Erstreckung) auf. Der Spaltbereich 10 ist in seiner Länge kleiner als die halbe Gesamtlänge 31 (axiale Erstreckung) des Grundkörpers 6 ausgeführt. In diesem Ausführungsbeispiel beträgt die Tiefe 30 des Spaltbereiches 10 zwischen 0,8 mm bis 1 mm. Folglich kommt es lediglich seitens des Gleitbereiches 8 zu einem gleitenden Kontakt zwischen dem Grundkörper 6 und dem Hülsenbereich 5 im Betrieb des Nehmerzylinders 1.

An den Spaltbereich 10 schließt die Dichtung 7 derart axial an, dass der Kolben 4 zwischen dem Gleitbereich 8 des Grundkörpers 6 sowie einer an dem Hülsenbereich 5 anliegenden (ersten) Dichtstelle 11 der Dichtung 7 durchgängig von dem Hülsenbereich 5 beabstandet ist. Die erste Dichtstelle 11 ist durch eine erste (ringförmige) Dichtlippe 26 der Dichtung 7 / des Dichtbestandteils 23 gebildet. Die erste Dichtlippe 26 ist radial von außen an dem Hülsenbereich 5 abgestützt.

Die Länge des Spaltbereiches 10 ist zusammen mit der Ausbildung der Dichtung 7 so auf den Verschiebeweg 29 des Kolbens 4 zwischen der eingefahrenen und der ausgefahrenen Stellung abgestimmt, dass die Dichtung 7 mit ihrer ersten Dichtstelle 11 über den gesamten Verschiebeweg 29 (vorzugsweise ca. 8 mm) hinweg an einem anderen Längsabschnitt 12 (erster Längsabschnitt 12) als der Gleitbereich 8 (zweiter Längsabschnitt 13) an dem Hülsenbereich 5 abgestützt ist (Fig. 3). Somit gleitet die Dichtung 7 nicht an dem gleichen (zweiten) Längsabschnitt 13 des Hülsenbereiches 5 entlang, wie der Gleitbereich 8, sondern weist ihren eigenen, von dem zweiten Längsabschnitt 12 vollständig beabstandeten, ersten Längsabschnitt 12 auf. Da der Grundkörper 6 sowie der Hülsenbereich 5, wie auch das gesamte Gehäuse 2, aus einem faserverstärkten Kunststoffmaterial bestehen und im Betrieb bei Auftreten eines bestimmten Verschleißverhaltens ein Freilegen der entsprechenden Faserbereiche dieses faserverstärkten Kunststoffmaterials stattfindet, wird die Dichtung 7 davor geschont, über diese freigelegten Bereiche hinweg zu gleiten.

Radial außerhalb der ersten Dichtstelle 11 weist die Dichtung 7 / der Dichtbestandteil 23 auf typische Weise eine weitere, zweite Dichtstelle 15 auf, die durch eine zweite Dichtlippe 27 ausgebildet ist. Die zweite Dichtstelle 15 liegt an einer radialen Innenseite des Außenwandbereichs 21 an. Die zweite Dichtstelle 15 befindet sich in axialer Richtung auf gleicher Höhe wie die erste Dichtstelle 11. Die Dichtung 7 / der Dichtbestandteil 23 ist aus einem Elastomer hergestellt.

In anderen Worten ausgedrückt, wird das Kolbendesign erfindungsgemäß so gewählt, dass zugleich eine gute Führung des Kolbens 4 im CSC-Gehäuse 2 und auch mehr Spiel zwischen Kolben 4 und Gehäuse 4 im kritischen Bereich (Laufbereich (erster Längsabschnitt 12) der Dichtung 7) gewährleistet sind. Dafür wird ein Freistich (Aussparung 14) in den bestehenden Kolben 4 eingebracht, welcher ca. 0,8 mm bis 1 mm tief ist und die Länge des Laufbereichs 12 der Dichtung 7 hat. Dies würde auch bei einem starken Taumeln des Kolbens 4 einen Kontakt zum Gehäuse 2 und somit einen starken Verschleiß im Laufbereich 12 der Dichtung 7 verhindern. Die Dichtung 7 verschleißt dadurch weniger. Vorzugsweise ist ein Vollkunststoff CSC 1 realisiert.

### Bezugszeichenliste

- 1: Nehmerzylinder
- 2: Gehäuse
- 3: Druckraum
- 4: Kolben
- 5: Hülsenbereich
- 6: Grundkörper
- 7: Dichtung
- 8: Gleitbereich
- 9: Haltebereich
- 10: Spaltbereich
- 11: erste Dichtstelle
- 12: erster Längsabschnitt
- 13: zweiter Längsabschnitt
- 14: Aussparung
- 15: zweite Dichtstelle
- 16: Betätigungslager
- 17: Vorspannfeder
- 18: Faltenbalg
- 19: Längsachse
- 20: Durchgangsloch
- 21: Außenwandbereich
- 22: Dichtringhalter
- 23: Dichtbestandteil
- 24: Lagerinnenring
- 25: Lageraußenring
- 26: erste Dichtlippe
- 27: zweite Dichtlippe
- 28: Öffnung
- 29: Verschiebeweg
- 30: Tiefe
- 31: Gesamtlänge

## Patentansprüche

1. Nehmerzylinder (1) für eine Kupplungsbestätigungseinrichtung eines Kraftfahrzeuges, mit einem Gehäuse (2) und einem in dem Gehäuse (2) verschiebbar aufgenommenen sowie mit dem Gehäuse (2) einen fluidischen Druckraum (3) begrenzenden Kolben (4), wobei der Kolben (4) einen entlang eines Hülsenbereiches (5) des Gehäuses (2) gleitend geführten Grundkörper (6) und eine an dem Grundkörper (6) angebrachte, den Druckraum (3) zu einer Umgebung hin abdichtende Dichtung (7) aufweist, **wobei** der Grundkörper (6) axial zwischen einem an dem Hülsenbereich (5) abgestützten Gleitbereich (8) sowie einem die Dichtung (7) aufnehmenden Haltebereich (9) einen zu dem Hülsenbereich (5) beabstandeten Spaltbereich (10) aufweist und wobei der Spaltbereich (10) direkt an den Haltebereich (9) anschließt, sodass der Grundkörper (6) axial zwischen einer an dem Hülsenbereich (5) anliegenden Dichtstelle (11) der Dichtung (7) und dem Gleitbereich (8) durchgängig von dem Hülsenbereich (5) beabstandet ist, **dadurch gekennzeichnet, dass** die Länge des Spaltbereiches (10) maximal die Hälfte der Gesamtlänge des Grundkörpers(6) beträgt.

2. Nehmerzylinder (1) nach Anspruch 1, **dadurch gekennzeichnet, dass** der Spaltbereich (10) eine derartige Länge aufweist, dass ein erster Längsabschnitt (12) des Hülsenbereiches (5), entlang dessen die Dichtung (7) im Betrieb hin und her verschiebbar ist, vollständig neben einem zweiten Längsabschnitt (13) des Hülsenbereiches (5), entlang dessen der Gleitbereich (8) des Grundkörpers (6) im Betrieb hin und her verschiebbar ist, angeordnet ist.

3. Nehmerzylinder (1) nach einem der Ansprüche 1 bis 2, **dadurch gekennzeichnet, dass** der Spaltbereich (10) durch eine in radialer Richtung eingebrachte Aussparung (14) ausgebildet ist.

4. Nehmerzylinder (1) nach einem der Ansprüche 1 bis 3, **dadurch gekennzeichnet, dass** die Aussparung (14) eine Tiefe (30) von bis zu 70% einer Dicke des Grundkörpers (6) aufweist.

5. Nehmerzylinder (1) nach einem der Ansprüche 1 bis 4, **dadurch gekennzeichnet, dass** der Hülsenbereich (5) und/oder der Grundkörper (6) aus einem Kunststoffmaterial bestehen/besteht.

6. Nehmerzylinder (1) nach Anspruch 5, **dadurch gekennzeichnet, dass** das Kunststoffmaterial ein faserverstärktes Kunststoffmaterial ist.

7. Nehmerzylinder (1) nach einem der Ansprüche 1 bis 6, **dadurch gekennzeichnet, dass** die Dichtung (7) aus einem Elastomer besteht.

8. Betätigungseinrichtung für eine Kupplung eines Kraftfahrzeuges, mit einem Nehmerzylinder (1) nach zumindest einem der Ansprüche 1 bis 7.

9. Kupplungssystem für einen Antriebsstrang eines Kraftfahrzeuges, mit einer Kupplung sowie einer Betätigungseinrichtung nach Anspruch 8.

## Claims

1. A slave cylinder (1) for a coupling actuation device of a motor vehicle, having a housing (2) and a piston (4) which is movably received in the housing (2) and delimits a fluidic pressure chamber (3) with the housing (2), wherein the piston (4) has a main body (6), which is slidingly guided along a sleeve area (5) of the housing (2), and a seal (7), which is attached to the main body (6) and seals the pressure chamber (3) from the surroundings, **wherein** the main body (6) has a gap area (10) spaced apart from the sleeve area (5) axially between a sliding area (8) supported on the sleeve area (5) and a holding area (9) receiving the seal (7), and wherein the gap area (10) directly adjoins the holding area (9), such that the main body (6) is axially spaced continuously from the sleeve area (5) between a sealing point (11) of the seal (7) resting against the sleeve area (5) and the sliding area (8), **characterised in that** the length of the gap area (10) is a maximum of half the total length of the main body (6).

2. The slave cylinder (1) according to claim 1, **characterised in that** the gap area (10) has a length such that a first longitudinal section (12) of the sleeve area (5), along which the seal (7) is movable back and forth during operation, is completely next to a second longitudinal section (13) of the sleeve area (5), along which the sliding area (8) of the main body (6) is movable back and forth during operation.

3. The slave cylinder (1) according to one of claims 1 to 2, **characterised in that** the gap area (10) is formed by a recess (14) introduced in the radial direction.

4. The slave cylinder (1) according to one of claims 1 to 3, **characterised in that** the recess (14) has a depth (30) of up to 70% of a thickness of the main body (6).

5. The slave cylinder (1) according to one of claims 1 to 4, **characterised in that** the sleeve area (5) and/or the main body (6) consist(s) of a plastic material.

6. The slave cylinder (1) according to claim 5, **characterised in that** the plastic material is a fibre-reinforced plastic material.

7. The slave cylinder (1) according to one of claims 1 to 6, **characterised in that** the seal (7) consists of an elastomer.

8. An actuation device for a coupling of a motor vehicle, having a slave cylinder (1) according to at least one of claims 1 to 7.

9. A coupling system for a drive train of a motor vehicle, having a coupling and an actuation device according to claim 8.

## Revendications

1. Cylindre récepteur (1) pour un dispositif d'actionnement d'embrayage d'un véhicule automobile, comprenant un carter (2) et un piston (4) logé de manière coulissante dans le carter (2) et délimitant avec le carter (2) une chambre de pression fluidique (3), le piston (4) présentant un corps de base (6) guidé de manière coulissante le long d'une partie manchon (5) du carter (2) et un joint d'étanchéité (7) monté sur le corps de base (6) et rendant la chambre de pression (3) étanche par rapport à un environnement, le corps de base (6) présentant dans le sens axial, entre une partie de coulissement (8) s'appuyant sur la partie manchon (5) ainsi qu'une partie de retenue (9) recevant le joint d'étanchéité (7), une partie fente (10) espacée de la partie manchon (5) et la partie fente (10) se raccordant directement à la partie de retenue (9), de sorte que le corps de base (6) soit espacé dans le sens axial de la partie manchon (5) de manière continue entre un point d'étanchéité (11) du joint d'étanchéité (7) reposant sur la partie manchon (5) et la partie de coulissement (8), **caractérisé en ce que** la longueur de la partie fente (10) représente au maximum la moitié de la longueur totale du corps de base (6).

2. Cylindre récepteur (1) selon la revendication 1, **caractérisé en ce que** la partie fente (10) présente une longueur telle qu'une première section longitudinale (12) de la partie manchon (5), le long de laquelle le joint d'étanchéité (7) peut être déplacé en va-et-vient en service, est disposée entièrement à côté d'une deuxième section longitudinale (13) de la partie manchon (5), le long de laquelle la partie de coulissement (8) du corps de base (6) peut être déplacée en va-et-vient en service.

3. Cylindre récepteur (1) selon l'une quelconque des revendications 1 à 2, **caractérisé en ce que** la partie fente (10) est formée par un évidement (14) pratiqué dans le sens radial.

4. Cylindre récepteur (1) selon l'une quelconque des revendications 1 à 3, **caractérisé en ce que** l'évidement (14) présente une profondeur (30) pouvant atteindre 70% d'une épaisseur du corps de base (6).

5. Cylindre récepteur (1) selon l'une quelconque des revendications 1 à 4, **caractérisé en ce que** la partie manchon (5) et/ou le corps de base (6) est/sont constitué(s) d'un matériau plastique.

6. Cylindre récepteur (1) selon la revendication 5, **caractérisé en ce que** le matériau plastique est un matériau plastique renforcé de fibres.

7. Cylindre récepteur (1) selon l'une quelconque des revendications 1 à 6, **caractérisé en ce que** le joint d'étanchéité (7) est constitué d'élastomère.

8. Dispositif d'actionnement pour un embrayage d'un véhicule automobile comprenant un cylindre récepteur (1) selon au moins l'une quelconque des revendications 1 à 7.

9. Système d'embrayage pour une chaîne cinématique d'un véhicule automobile comprenant un embrayage et un dispositif d'actionnement selon la revendication 8.
